# EUROPEAN PATENT APPLICATION

(11) **EP 4 773 455 A1**
(43) Date of publication of application: **08.07.2026**
(21) Application number: 24857713.2
(22) Date of filing: 18.03.2024
(51) Int. Cl.: H02H 9/04, H01R 13/24

(54) **SURGE PROTECTION DEVICE**

(30) Priority: 01.09.2023 CN 202311122458
(71) Applicant: SHANGHAI CHENZHU INSTRUMENT CO., LTD., Shanghai 201612 (CN)
(72) Inventor: WANG, Heng, Shanghai 201612 (CN); QIAO, Shuning, Shanghai 201612 (CN); DONG, Guanglong, Shanghai 201612 (CN); LIU, Zhenhui, Shanghai 201612 (CN); LI, Zhuang, Shanghai 201612 (CN); CHEN, Keqi, Shanghai 201612 (CN)
(74) Representative: Huang, Liwei
(86) International application number: PCT/CN2024/082196
(87) International publication number: WO 2025/044160

(57) **Abstract**

The present invention provides a surge protection device. The surge protection device comprises a base and a protection module; the protection module comprises inverted snaps, a slide groove, a PCB , a light guide column , and a Type-C interface ; the base comprises a lower housing, a cover, a grounding piece, wiring terminals, wire plugging ports, clips, inverted snap grooves, bus pins, and grounding clips; each wiring terminal comprises a pressing block, a U-shaped elastic piece, and a copper busbar; the base and the protection module are connected by means of the clips, the inverted snap grooves, and the inverted snaps; and the slide groove is of an error-proof design. According to the present invention, wire plugging and unplugging can be achieved without using tools, and ordered arrangement of wires is achieved; in addition, a 30kA instantaneous current or a larger impact current can be resisted.

## Description

### TECHNICAL FIELD

The disclosure relates to the technical field of power-off protection, and in particular, to a surge protection device.

### BACKGROUND

Thunder and lightning are natural phenomenon, and the instantaneous current generated during a lightning strike can range from several kA to hundreds of kA. Even induced lightning currents possess tremendous destructive power against a signal system. For the signal system, power-off and lightning current protection is the primary concern. An overvoltage caused by lightning or other factors can not only damage the signal system itself but also bring irreversible damage to sensors and converters inside the signal system. Currently, the signal system typically employs surge protection devices (SPDs) connected at both ends thereof for protection. The function of the surge protection device is to limit an instantaneous overvoltage within the signal system to a safe level, thereby preventing damage to equipment in the circuit.

The surge protection device operates on the following principle: under a normal operating condition, the surge protection device exhibits a high impedance to the nominal power frequency voltage, allowing virtually no current to flow, effectively acting as an open circuit and thus exerting no adverse effect on signal transmission within the system; when an instantaneous overvoltage occurs in the system, the surge protection device exhibits a low impedance to the overvoltage, effectively functioning as a short circuit to divert the high-magnitude transient current caused by the instantaneous voltage to ground, thereby protecting the connected equipment.

Therefore, damage to the signal system may occur if the surge protection device is unable to sufficiently divert surge currents induced by the overvoltage or to fully withstand a high instantaneous voltage.

Meanwhile, during installation of the surge protection device, a signal system with a large number of channels typically requires multiple surge protection devices to be deployed. In the process of installation, a wiring terminal is necessarily secured with a screw. Operation may be tedious due to dense wirings. For the installation of a complex signal system, there is a pressing need for a surge protection device that enables convenient operation and simplified wiring, thereby significantly reducing installation time and the likelihood of errors.

### SUMMARY

The invention provides a surge protection device including a base and a protection module, wherein the protection module comprises a snap recess, an inverted snap, a slide groove, a PCB, a light guide column and a TYPE-C interface; the base including a lower housing, a cover, a grounding piece, a wiring terminal, a wire plugging port, a clip, a bus pin and a grounding clip; the base being connected to the protection module through the clip, the snap recess and the inverted snap; the wiring terminal including a pressing block, a U-shaped elastic piece and a copper busbar.

Further, the clip has a U-shaped configuration.

Further, the clip includes a clip body, an inverted hook and a connecting portion, and the clip body is connected to the inverted hook through the connecting portion.

Further, in the surge protection device, the clip body is provided with a right clamping jaw and a left clamping jaw, the inverted hook is provided with an arched part, and the arched part forms a point contact with the clip body and abuts against the clip body.

Further, the clip body and the inverted hook are formed as an asymmetric eccentric configuration.

Further, the pressing block is connected to the U-shaped elastic piece through the copper busbar.

Further, the grounding part includes a connection end and a semicircular body, and the connection end is connected to the grounding clip by a conductor.

Further, the slide groove has an asymmetrical configuration with a width difference between two sides of the slide groove.

The disclosure has beneficial effects as follows:
(1) Connection is simple and intuitive, accomplished manually with both hands, and 100% of operation requires no tools;
(2) Direct-plug wiring with dual U-shaped elastic piece reduces wiring time by more than 80%, enabling connections to be completed within 1 second.
(3) In the plug-in series, the base need not be replaced when changing the surge protection module, and rewiring is unnecessary; and the slide groove features an asymmetric design that provides mistake-proof insertion.
(4) Direct-plug wiring is safer without damage to wires and requires no tools; specifically, the operation of the Direct-plug wiring can be fully established without using a screwdriver, thereby eliminating scratches caused by screw tightening.
(5) Advantage of side plug-in: all wiring is located at the side of the surge protection device and enters at an angle, significantly reducing the wire bending and resulting in a more secure and reliable connection; additionally, the side plug-in avoids stress damage to the wires during insertion.
(6) The service life is extended, as no screw tightening is required thereafter; the elastic contact provides a more secure retention.
(7) It is applicable to the surge power-off protection for the signal system and can withstand surge current 30kA or high.

### BRIEF DESCRIPTION OF DRAWINGS

The accompanying drawings, which form part of the disclosure, are included to provide a further understanding of the disclosure. Exemplary embodiments of the disclosure are provided for explanatory purposes only and do not limit the scope of the disclosure. In the drawings:
FIG. 1 is a schematic view of a surge protection device;
FIG. 2 is a schematic perspective view of the surge protection device;
FIG. 3 is an internal structural view of a base of the surge protection device;
FIG. 4 is a schematic structural view of a clip;
FIG. 5 is an enlarged view of portion A shown in FIG. 3 of the present disclosure;
FIG. 6 is a schematic structural view showing a connection between a pressing block, a U-shaped elastic piece and a copper busbar according to the present disclosure;
FIG. 7 is a schematic structural view of the pressing block, the U-shaped elastic piece and the copper busbar after a wire is inserted;
FIG. 8 is a schematic structural view of a grounding piece according to the present disclosure;
FIG. 9 is a schematic view of an inverted snap and a slide groove according to the present disclosure; and
FIG. 10 is a schematic structural view of a surge protection device according to another embodiment of the present disclosure.

### Description of Reference Numerals:

1-base; 2-protection module; 3-lower housing; 4-cover, 5-grounding piece, 6-pressing block; 7-U-shaped elastic piece; 8-copper busbar; 9-wire plugging port; 10-clip; 11-snap recess; 12-inverted snap; 13-bus pin; 14-slide groove; 15-PCB; 16-light guide column; 17-TYPE-C interface; 18-grounding clip; 19-inverted hook; 20-right clamping jaw; 21-left clamping jaw; 22-clip body; 23-connecting part; 24-arched part; 25-insertion channel; 26-connection end; 27-semicircular body; 28-contact end; 29-pressing part; 30-tap; 31-bent part; 32-conductor; and 33-wire.

### DETAIL DESCRIPTION OF EMBODIMENTS

Example embodiments will be described more in detail with reference to the accompanying drawings. Example embodiments may, however, be embodied in many different forms and should not be construed as limited to the examples set forth herein; rather, these embodiments are provided so that this disclosure will be thorough and complete, and will fully convey the concept of example embodiments to those skilled in the art. The drawings are merely schematic illustrations of the present disclosure and are not necessarily drawn to scale. The same reference numerals in the drawings denote the same or similar parts, and a repetitive description thereof will be omitted.

Furthermore, the described features, structures or characteristics may be combined in any suitable manner in one or more embodiments. In the following description, numerous specific details are set forth to provide a thorough understanding of the present disclosure. Those skilled in the art will recognize, however, that the disclosure may be practiced without one or more of the specific details, or with other methods, components, devices, steps, and/or equivalents. In other instances, well-known structures, methods, devices, materials or operations are not described in detail so as not to obscure the subject matter of the present disclosure.

For ease of description, spatially relative terms such as "upper", "lower", "left" and "right" may be used herein to describe the relative positioning of one element or feature with respect to another as shown in the drawings. It should be understood that these terms are intended to encompass possible orientations of the device during use or operation, not only the orientation depicted in the drawings. For example, if the device shown in the drawings is inverted, an element described as being "below" another element would then be positioned "above" that element. Accordingly, the term "lower" is used in a relative sense and may correspond to either a "lower" or "upper" position. The device may also be oriented in other ways, for instance, rotated by 90 degrees, and the spatially relative terms used herein shall be interpreted accordingly.

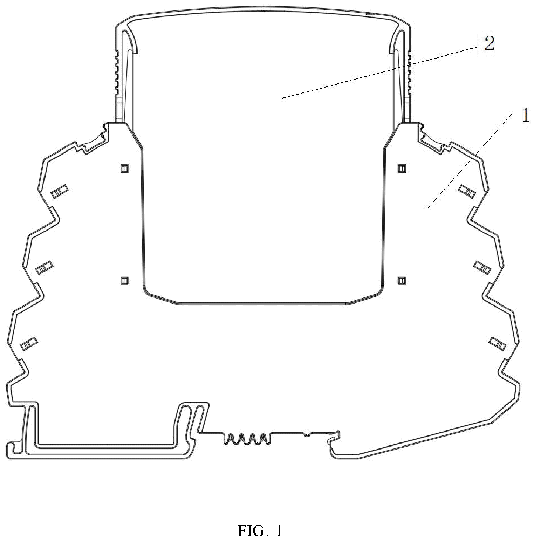

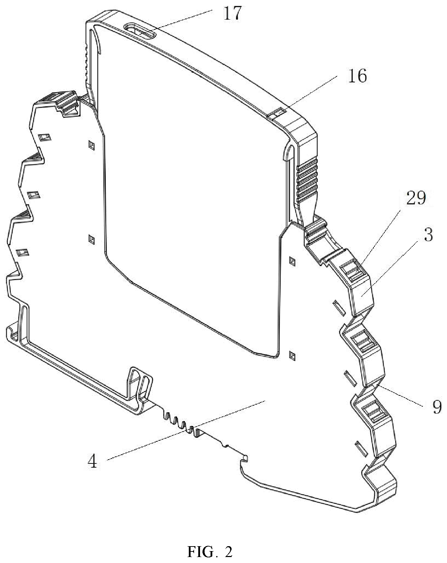

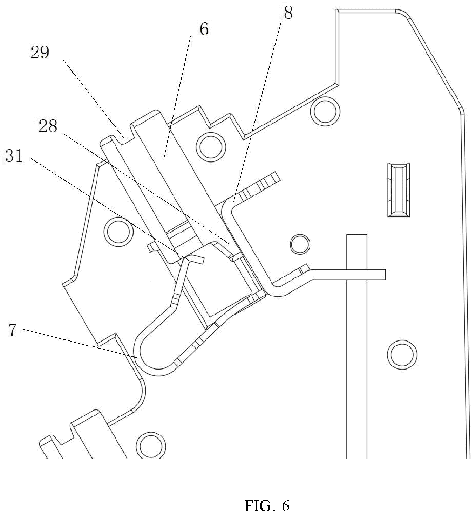

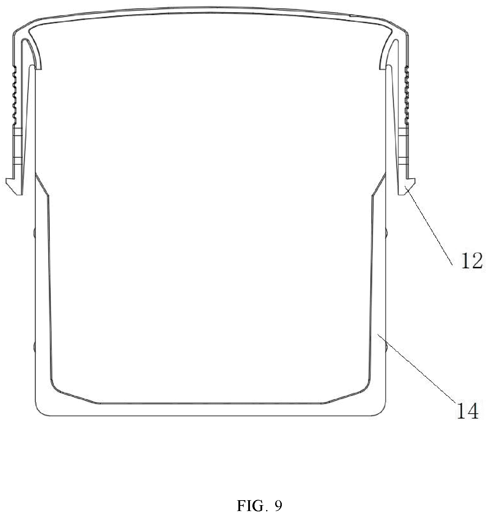

The present disclosure provides a surge protection device. With reference to FIGS. 1 to 10, the overall structure of the surge protection device includes a base 1 and a protection module 2. The protection module 2 includes an inverted snap 12, a slide groove 14, a printed circuit board (PCB) 15, a light guide column 16, and a TYPE-C interface 17. The base 1 includes a lower housing 3, a cover 4, a grounding piece 5, a wiring terminal, a wiring port 9, a clip 10, a snap recess 11, a bus pin 13 and a grounding clip 18. The wiring terminal further includes a pressing block 6, a U-shaped elastic piece 7 and a copper busbar 8.

The base 1 and the protection module 2 are connected by means of the clip 10, the snap recess 11 and the inverted snap 12. When the base 1 is connected to the protection module 2, the slide groove 14 is designed to prevent the protection module 2 from being inserted wrongly when being inserted into the base 1.

The base 1 is connected with a guide rail and is mounted on the guide rail through the grounding piece 5. The lower housing 3 of base is provided with the wiring port 9 on its side, A wire is inserted through the wiring port 9. A protection circuit is disposed on the PCB 15 housed within the protection module 2.

The pressing block 6 is connected to the clip 10 by the wire 33.

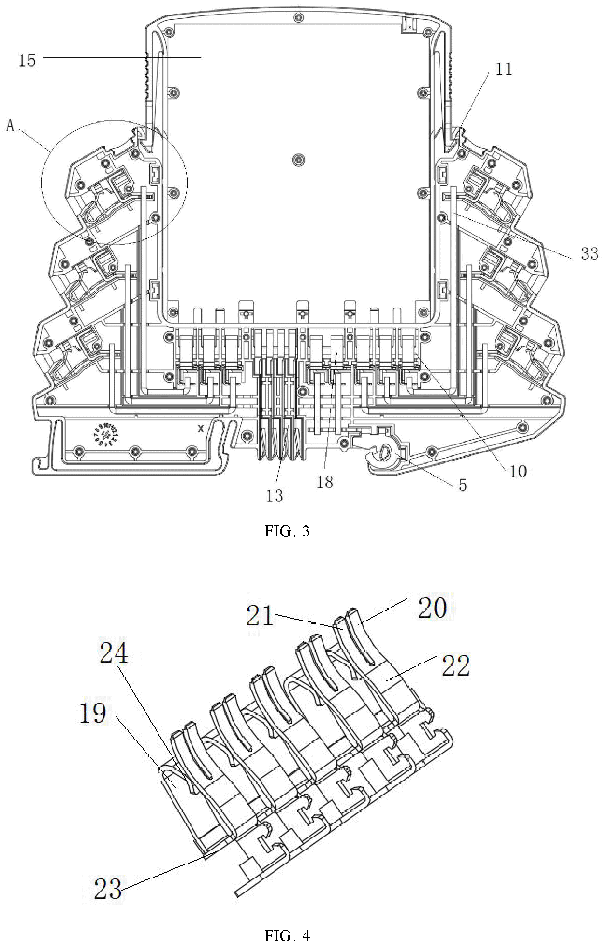

Hereinafter, an internal structure of the base is described in detail with reference to FIGS. 3 and 4. The clip 10 of the base has a U-shaped configuration and includes the clip body 22, an inverted hook 19 and a connecting part 23. One end of the clip body 22 is connected to one end of the inverted hook 19 through the connecting part 23. The other end of the clip body 22 is provided with a right clamping jaw 20 and a left clamping jaw 21. The other end of the inverted hook 19 is provided with an arched part 24. Preferably, the arched part 24 of the inverted hook 19 forms a point contact with and abuts against the clip body 22, thereby securing the PCB 15 when it is inserted between the main body 22 and the inverted hook 19.

Preferably, the clip body 22 and the inverted hook 19 are designed as an asymmetric eccentric configuration.

The aforementioned structure design of clip 10 can serve both to connect and secure the PCB 15 in place, and also can withstand significant surge current when being subjected to lightning current and strike. The clip 10 is directly connected with the PCB 15 via the arched part 24, serving both to conduct electric current and fix the PCB

In particular: 1. the pressing block and the PCB are connected through the conductor, acting as a bridge for current flow; 2. the lightning current in the circuit is safely discharged through the lightning protection module and the grounding system, and the U-shaped structure enhances the ability to withstand high surge currents; 3. a secure fixation is provided when the circuit board is inserted, and the eccentric design of the inverted hook 19 and the clip body 22 ensures asymmetry, providing more space on one side of the PCB 15 for mounting components with significant height, thus optimizing space usage; the circuit of the PCB 15 is positioned between two sides of the clip 10, where one side of the clip has multiple contact points formed by the right clamping jaw 20 and the left clamping jaw 21, providing robust current flow paths on both sides and enhancing the overall discharge capacity; 4. the design of left and right clamping jaw and arched part 24 is adopted, wherein right clamping jaw 20 and left clamping jaw 21 apply forces on both sides of the circuit board; due to a great shrinkage factor of the plastic housing, the plastic housing of the surge protection device may be deformed due to moisture absorption or manufacturing tolerances; if the fixation is made by a single-sided clip and plastic housing, the crimping force would be influenced; consequently the force applied on both sides by means of the arched part 24 and right clamping jaw 20 and left clamping jaw 21 forms a clamping force, ensuring accurate positioning and even force distribution. The clip 10 is also connected to the grounding piece 5 through the conduct.

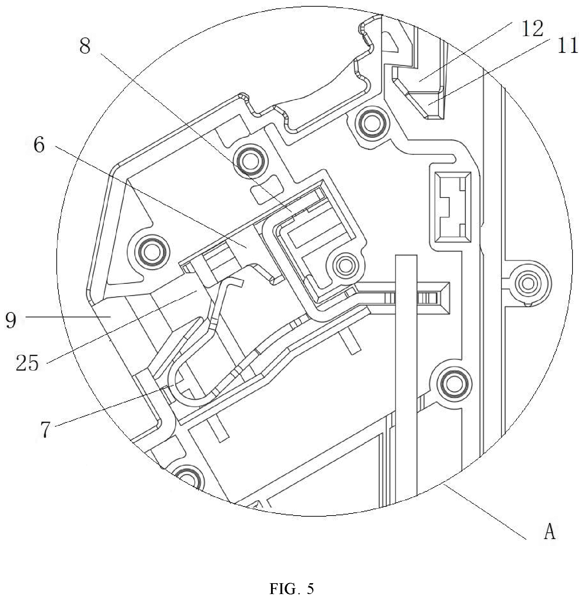

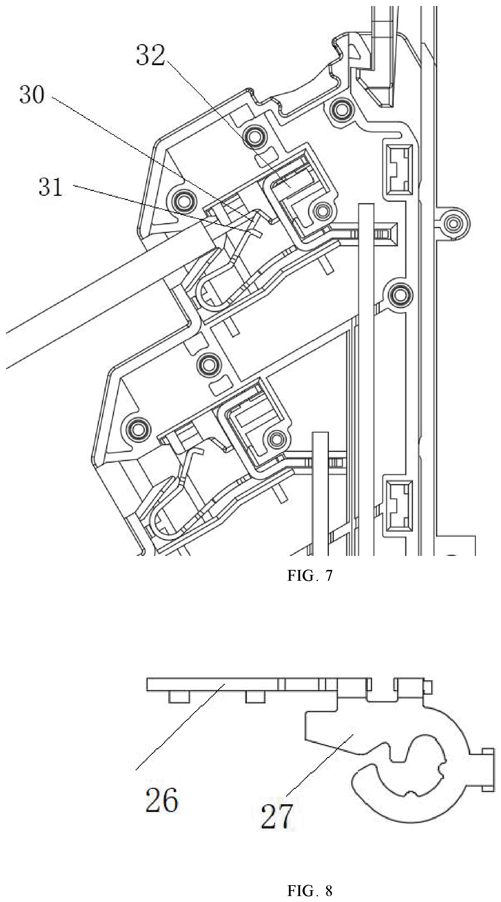

The structure of the wiring terminal and its operation in the process of wire plugging and unplugging will now be described in detail with reference to FIGS. 5, 6, and 7. The terminal comprises a pressing block, a U-shaped elastic piece 7 and a copper busbar 8. The pressing block 6 is provided with a contact end 28, a pressing part 29 and a tab 30. The U-shaped elastic piece 7 is provided with a bent part 31. The contact end 28 of the pressing block 6 contacts and presses against the copper busbar 8. The bent part 31 of the U-shaped elastic piece 7 contacts and presses against the pressing block 6. A channel for plugging the conductor 32 is formed at the corresponding position of the pressing block 6 and the copper busbar 8, the channel corresponds to the wire insertion channel 25. As could be seen from FIG. 7, the conductor 32, when inserted from the wire insertion channel 25 of the wire plugging port 9 of the base, passes through the pressing block 6 and the copper busbar 8. As the conductor 32 is inserted, the tab 30 of the pressing block 6 presses downward on the bent part 31 of the U-shaped elastic piece 7, thereby allowing the wire to be smoothly inserted into the wire insertion channel 25. When removal of the conductor 32 is required, the pressing part 29 of the pressing block 6 is pressed so as to apply a force to the U-shaped elastic piece 7, thereby releasing the conductor 32 so that it can be directly pulled out. The operation is simpler. The U-shaped elastic piece 7 automatically forms a self-locked state after the conductor is inserted during wiring, requiring no tools. During disconnection, the pressing block 6 is pressed to pull out the conductor.

As could be seen from FIGS. 1 to 7, the structure incorporating the pressing block 6, the U-shaped elastic piece 7 and the copper busbar 8 allows for side insertion of the conductor into the surge protection device. During the installation of the surge protection device on the guide rail, multiple surge protection devices may be used. This configuration ensures more orderly wiring, thereby preventing wire clutter. When the present disclosure is in operation, the current can flow through the current path formed by the pressing block 6 and the clip 10 via the conductor 32 which can withstand lightning currents exceeding 30kA.

Hereinafter, the grounding piece 5 is described with reference to FIG. 8. The grounding piece 5 includes a connection end 26 and a semicircular connection body 27, wherein the connection end 26 is connected to a grounding clip 18 through the conductor. The semicircular body 27 has a semicircular shape configured to facilitate clipping on the base.

Referring to FIGS. 3, 5, and 9, the structures of the snap recess 11, the inverted snap 12 and the slide groove 14 are described in detail. The slide groove 14 of the protection module 2 is designed to prevent incorrect insertion. Specifically, the design of preventing incorrect insertion is formed as an asymmetric design of the slide groove 14 with a width difference between on two sides of the slide groove. Preferably, the width difference of the slide groove is 1 to 5 mm, thus preventing incorrect insertion during insertion.

The inverted snap 12 and the snap recess 11 play a role of fixing the protection module 2 and the base 1.

The base 1 is provided with a bus pin 13, which is connected to the copper busbar on the guide rail through a connecting piece, wherein the connecting piece and the guide rail are not shown in the drawings.

The protection module 2 is also provided with a light guide column 16. The light guide column 16 is used to indicate a failure status of the module. A light-up of the light guide column indicates that the protection module needs to be replaced. However, the base does not need to be replaced during such replacement

The functions of light guide column are as follows: 1. the transparent light guide column provides a light-concentrating effect, gathering the light emitted by an indicator lamp into a focused beam, thereby improving visibility for a user; 2. a sealed space is formed with the housing to prevent dust ingress, achieving an ingress protection grade of at least IP20; 3. an electrostatic discharge function protects the circuit from being damaged by the static electricity through an indicator opening; and 3. the failure status of the module is displayed.

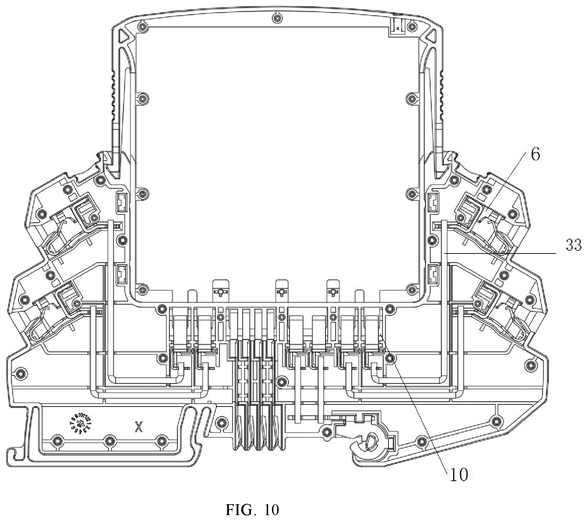

FIG. 10 shows an example according to another embodiment of the present disclosure which includes a 2-wire surge protection device. In this embodiment, there are provided four pressing blocks 6 and correspondingly four clips 10, and the clips 10 are connected to the pressing blocks 6 through wires 33.

The base further includes a nameplate, with label slots provided on both sides; however, this structure is not shown in the drawings. The preferred embodiments of the present disclosure have been described in detail above with reference to the accompanying drawings. However, the scope of the disclosure is not limited thereto. Within the scope of the technical concepts of the disclosure, various simple variations to the technical scheme of the disclosure are possible, including combinations of the individual technical features in any suitable manner. To avoid unnecessary repetition, the disclosure does not separately describe all such possible combinations. Nevertheless, all such variations and combinations are considered to be disclosed herein and are intended to fall within the scope of protection of the disclosure.

## Claims

1. A surge protection device comprising a base and a protection module, wherein the protection module comprises an inverted snap, a slide groove, a PCB, a light guide column and a TYPE-C interface;
the base comprises a lower housing, a cover, a grounding piece, a wiring terminal, a wire plugging port, a clip, a snap recess, a bus pin and a grounding clip;
the base is connected to the protection module through the clip, the snap recess and the inverted snap; and
the wiring terminal comprises a pressing block, a U-shaped elastic piece and a copper busbar.

2. The surge protection device of claim 1, wherein the clip has a U-shaped configuration.

3. The surge protection device of claim 1 or 2, wherein the clip comprises a clip body, an inverted hook and a connecting portion; and
the clip body is connected to the inverted hook through the connecting portion.

4. The surge protection device of claim 3, wherein the clip body is provided with a right clamping jaw and a left clamping jaw, the inverted hook is provided with an arched part, and the arched part forms a point contact with the clip body and abuts against the clip body.

5. The surge protection device of claim 3, wherein the clip body and the inverted hook are formed as an asymmetric eccentric configuration.

6. The surge protection device of claim 1, wherein the pressing block is provided with a contact end, a pressing part and a tab, the U-shaped elastic piece is provided with a bent part, the contact end of the pressing block is in contact with the copper busbar, and the bent part of the U-shaped elastic piece is in contact with the pressing block.

7. The surge protection device of claim 1, wherein the grounding part comprises a connection end and a semicircular body, and the connection end is connected to the grounding clip by a conductor.

8. The surge protection device of claim 1, wherein the slide groove has an asymmetrical configuration with a width difference between two sides of the slide groove.
